# EUROPEAN PATENT APPLICATION

(11) **EP 4 578 616 A1**
(43) Date of publication of application: **02.07.2025**
(21) Application number: 23856898.4
(22) Date of filing: 25.04.2023
(51) Int. Cl.: B29B 7/90, B01F 23/57, B01F 27/112, B01F 27/1123, B01F 27/61, B01F 27/70, B01F 35/213, B01F 35/71, B01F 35/75, B01J 4/00, B29B 7/14, B29B 7/24, B29B 7/60

(54) **FIBROUS FILLER STIRRING/SUPPLYING DEVICE, SUPPLY METHOD, MANUFACTURING METHOD, AND MANUFACTURING METHOD FOR THERMOPLASTIC RESIN COMPOSITION**

(30) Priority: 24.08.2022 JP 2022132962; 05.09.2022 JP 2022140453
(71) Applicant: Mitsubishi Engineering-Plastics Corporation, Tokyo 105-0021 (JP); Mitsubishi Chemical Corporation, Tokyo 100-8251 (JP)
(72) Inventor: TAJIRI, Toshiyuki, Hiratsuka-shi, Kanagawa 254-0016 (JP); KUMASAWA, Teruhisa, Hiratsuka-shi, Kanagawa 254-0016 (JP)
(74) Representative: Müller-Boré & Partner Patentanwälte PartG mbB
(86) International application number: PCT/JP2023/016196
(87) International publication number: WO 2024/042778

(57) **Abstract**

A stirring and feeding apparatus of a fibrous filler enables even a fibrous filler that is easy to spread, that has a low bulk density, and that is easy to flocculate to be uniformly and stably transported with a screw.

A stirring and feeding apparatus for feeding a fibrous filler from a hopper storing the fibrous filler to a discharge portion, comprises:
a connecting tank between the hopper and the discharge portion,
wherein, in the connecting tank, a shaft that rotates around a rotation shaft is provided, and a stirring blade for stirring the fibrous filler is provided at a tip of the shaft such that the stirring blade rotates along an inner circumferential surface of the connecting tank, and the stirring blade is inclined inwards at an angle θ of 10° to 70° with respect to a rotation direction of the stirring blade.

## Description

### Technical Field

The present invention relates to a stirring and feeding apparatus, a feeding method, and a production method of a fibrous filler, and a production method of a thermoplastic resin composition.

### Background Art

In order to produce a composition of a resin, a method in which a raw material resin and a variety of additives are supplied to an extruder and melt-kneaded to produce pellets of a resin composition is being widely performed. A fiber-reinforced thermoplastic resin composition, into which a fibrous filler such as a carbon fiber or a glass fiber has been blended as an additive, makes the strength of a molded product, which is to be obtained, large, and is being widely used in a variety of fields.

In order to produce a fiber-reinforced thermoplastic resin composition, the resin pellets of a thermoplastic resin, which is a raw material, are supplied to an extruder, and the resin pellets are melted in the cylinder of the extruder and conveyed forward (downstream) with a screw. A fibrous filler is supplied into the cylinder with a side feeder at a predetermined position in the cylinder of the extruder. In the extruder, the molten thermoplastic resin and the fibrous filler are kneaded together by the rotation of the screw, and the fibrous filler is dispersed into pieces, appropriately cut, extruded from the tip nozzle, then, cooled and cut, whereby pellets of the fiber-reinforced thermoplastic resin composition are produced.

In a case where a variety of additives are supplied from the side feeder, a stirring and feeding apparatus, composed of a hopper (measuring tank) that stores raw material additives, a connecting tank below the hopper, an agitator that stirs raw materials in the connecting tank, and a screw cylinder having a screw for conveying the additives to a discharge portion at the bottom portion of the connecting tank, is provided.

Normally, the fibrous filler is provided as chopped fibers. When such a fibrous filler is supplied, as it is, to the extruder cylinder from the side feeder, stress that is applied to the fibrous filler during kneading with the thermoplastic resin becomes nonuniform, and the fibrous filler is likely to be broken or cut, and moreover the fiber length distribution in the thermoplastic resin composition becomes nonuniform.

However, an agitator in a conventional stirring and feeding apparatus is configured to stir raw materials in the connecting tank and is intended to suppress bridging in which part or all of the fibrous filler no longer falls into the connecting tank or a phenomenon in which only the central part of the fibrous falls off. However, when the fibrous filler has a small bulk density and is easy to spread, it is not possible to stably feed fibers to the cylinder with the screw. A fibrous filler that is easy to spread is easily spread and flocculated by being charged into the hopper (measuring tank), and moved downward, and moreover rotated with the agitator, thereby forming a bridge at the cylinder opening portion without dropping into the cylinder. Therefore, the fibrous filler cannot be sufficiently loaded into the cylinder, and uniform transport with the screw is difficult.

### Summary of Invention

### Technical Problem

An object of the present invention is to provide a stirring and feeding apparatus of a fibrous filler and a feeding method of a fibrous filler that enable uniform and stable transport with a screw of even a fibrous filler that is easy to spread, that has a low bulk density, and that is easy to flocculate in consideration of the above-described problem of the related art. In addition, another object of the present invention is to provide a production method of a fibrous filler for which spreading has been promoted and bulk density has been reduced by the stirring and feeding apparatus or the feeding method and a method for stably producing a thermoplastic resin composition into which a fibrous filler obtained by the above-described production method has been blended.

### Solution to Problem

In order to achieve the above-described objects, a stirring and feeding apparatus of a fibrous filler of the present invention is a apparatus for feeding a fibrous filler from a hopper storing the fibrous filler to a discharge portion, the stirring and feeding apparatus including: a connecting tank between the hopper and the discharge portion, wherein, in the connecting tank, a shaft that rotates around a rotation shaft is provided, and a stirring blade for stirring the fibrous filler is provided at a tip of the shaft such that the stirring blade rotates along an inner circumferential surface of the connecting tank, and the stirring blade is inclined inwards at an angle θ of 10° to 70° with respect to a rotation direction of the stirring blade.

It is preferable that the stirring and feeding apparatus of a fibrous filler includes a connecting tank having an approximately hemispherical inner circumferential surface between the hopper and the discharge portion, in the connecting tank a shaft that vertically rotates around a rotation shaft that horizontally protrudes inwards from the inner circumferential surface of the connecting tank is provided, and a stirring blade for stirring the fibrous filler is provided at a tip of the shaft such that the stirring blade vertically rotates along the inner circumferential surface of the connecting tank, and the stirring blade is inclined inwards at an angle θ of 10° to 70° with respect to a rotation direction of the stirring blade. In the stirring and feeding apparatus, a shortest distance of a gap between the stirring blade and the inner circumferential surface of the connecting tank is preferably within a range of 0.2 to 5 cm.

It is preferable that the stirring and feeding apparatus of a fibrous filler includes a connecting tank between the hopper and the discharge portion, a circular inclined surface is provided at a lower portion of the connecting tank diagonally upwards from the lower portion of the connecting tank, a shaft that rotates around a rotation shaft that protrudes inwards from a center of the circular inclined surface is provided, a stirring blade for stirring the fibrous filler is provided at a tip of the shaft such that the stirring blade rotates over the circular inclined surface, and the stirring blade is inclined inwards at an angle θ of 10° to 70° with respect to a rotation direction of the stirring blade. A shortest distance of a gap between the tip of the stirring blade and an inner wall surface of the connecting tank is preferably within a range of 0.2 to 5 cm.

The number of the stirring blades is preferably two to six.

At a bottom portion of the connecting tank, a screw for feeding the fibrous filler to the discharge portion is preferably provided.

An area obtained by multiplying an area of each stirring blade by cosθ of an inclination angle is preferably within a range of 0.1 times to 1.0 time an opening area of an opening portion at the bottom portion of the connecting tank toward the screw when seen from immediately above.

A feeding method of a fibrous filler of the present invention is a method for feeding a fibrous filler stored in a hopper to a discharge portion, wherein a connecting tank is provided between the hopper and the discharge portion, in the connecting tank an agitator, in which a shaft that rotates around a rotation shaft is provided, a stirring blade for stirring the fibrous filler is provided at a tip of the shaft such that the stirring blade rotates along an inner circumferential surface of the connecting tank, and the stirring blade is inclined inwards at an angle θ of 10° to 70° with respect to a rotation direction of the stirring blade, is provided, and the fibrous filler is spread with the agitator and supplied to the discharge portion with a screw provided at a bottom portion of the connecting tank.

In the feeding method, a rotation speed of the agitator is preferably 1% to 20% of a rotation speed of the screw.

It is preferable that a bulk density V₀ of the fibrous filler that is stored in the hopper is 0.3 to 0.7 g/cm³ and a bulk density V₁ of the discharged fibrous filler is within a range of 0.1 to 0.5 g/cm³ that is smaller than V₀.

A production method of a fibrous filler of the present invention is a method for producing a fibrous filler having a bulk density decreased by spreading the fibrous filler stored in a hopper, wherein a connecting tank is provided between the hopper and the discharge portion, in the connecting tank an agitator, in which a shaft that rotates around a rotation shaft is provided, a stirring blade for stirring the fibrous filler is provided at a tip of the shaft such that the stirring blade rotates along an inner circumferential surface of the connecting tank, and the stirring blade is inclined inwards at an angle θ of 10° to 70° with respect to a rotation direction of the stirring blade, is provided, and the fibrous filler is spread with the agitator and supplied to the discharge portion with a screw provided at a bottom portion of the connecting tank.

Here, it is preferable that a bulk density V₀ of the fibrous filler that is stored in the hopper is 0.3 to 0.7 g/cm³ and a bulk density V₁ of the discharged fibrous filler is within a range of 0.1 to 0.5 g/cm³ that is smaller than V₀.

A production method of a thermoplastic resin composition is a method for producing a thermoplastic resin composition containing a fibrous filler blended into a thermoplastic resin with an extruder, wherein a fibrous filler having a decreased bulk density obtained by the production method of a fibrous filler is side-fed from a side feeder provided downstream of a main feeding port of a raw material containing the thermoplastic resin and melt-kneaded.

### Advantageous Effects of Invention

According to the stirring and feeding apparatus of a fibrous filler of the present invention, it is possible to enable even a fibrous filler that is easy to spread, has a low bulk density, and is easy to flocculate to be uniformly and stably transported with a screw.

In addition, according to the feeding method of a fibrous filler of the present invention, it is possible to enable even a fibrous filler that is easy to spread and has a low bulk density to be stably supplied to a discharge portion.

In addition, according to the production method of a fibrous filler of the present invention, it is possible to stably produce a fibrous filler that has been spread and has a decreased bulk density.

In addition, according to the production method of a thermoplastic resin composition of the present invention, it is possible to stably produce a thermoplastic resin composition in which a fibrous filler has been uniformly dispersed.

### Brief Description of Drawings

[Fig. 1]

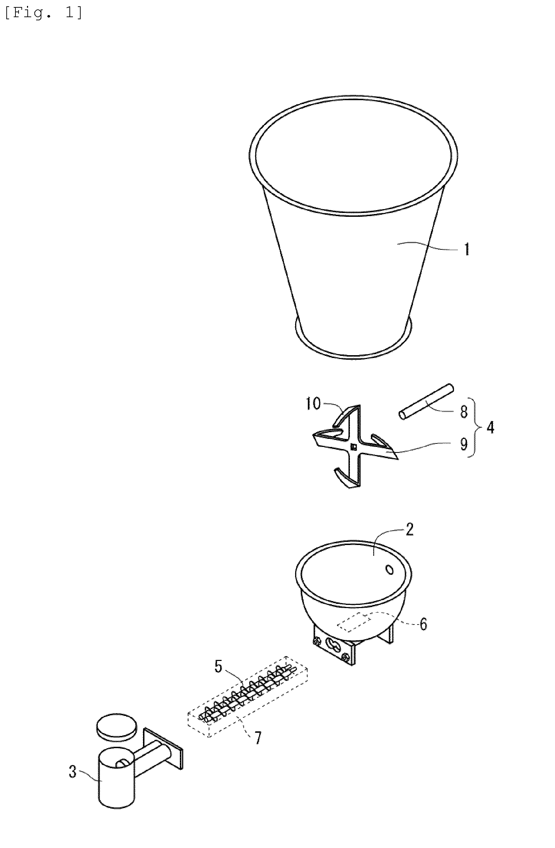

   Fig. 1 is an exploded perspective view showing one embodiment of a stirring and feeding apparatus of the present invention.
[Fig. 2]

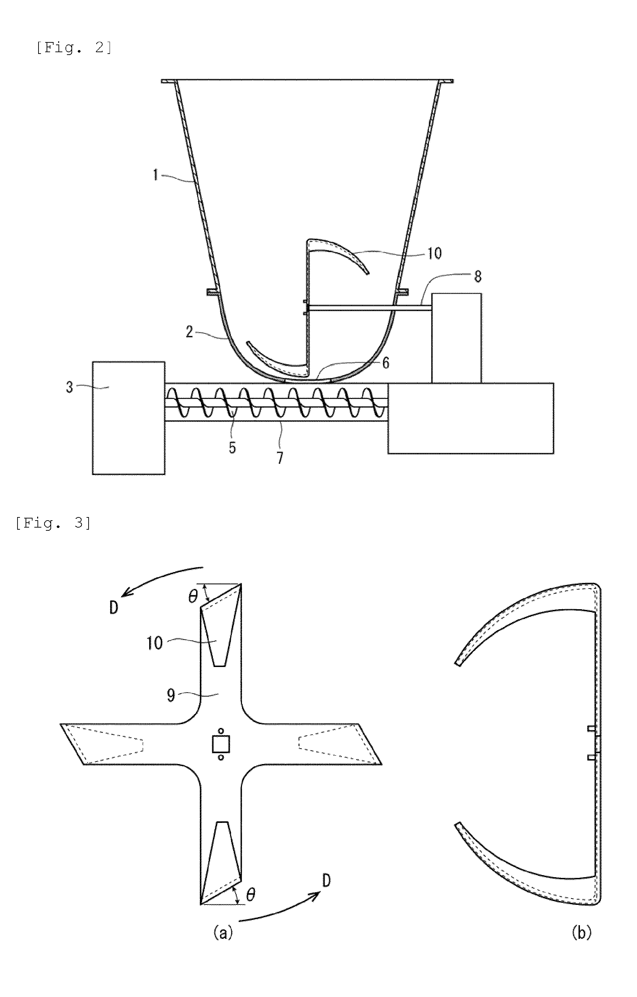

   Fig. 2 is a partial cross-sectional view of one embodiment of the stirring and feeding apparatus of the present invention.
[Fig. 3]
   Fig. 3 is a plan view and a side view showing one embodiment of a stirring blade that is used in the stirring and feeding apparatus of the present invention.
[Fig. 4]

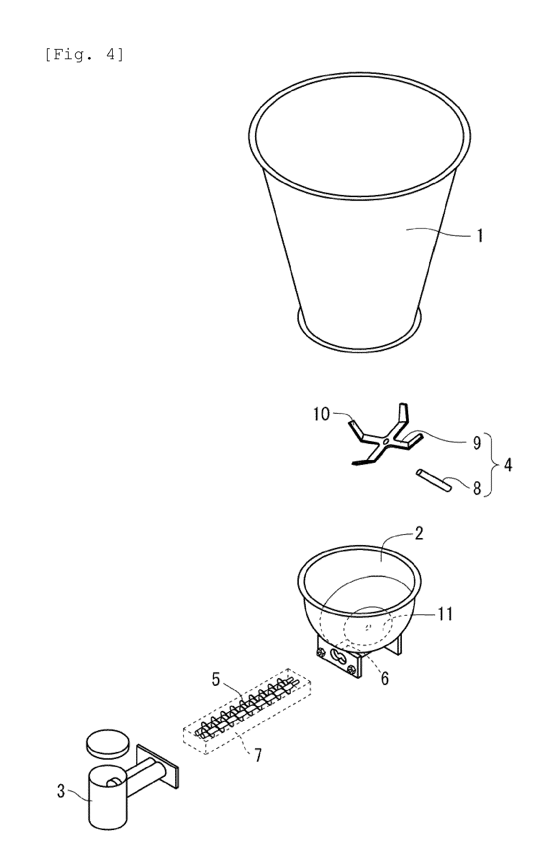

   Fig. 4 is an exploded perspective view showing an embodiment having a circular inclined surface at a lower portion of a connecting tank.
[Fig. 5]

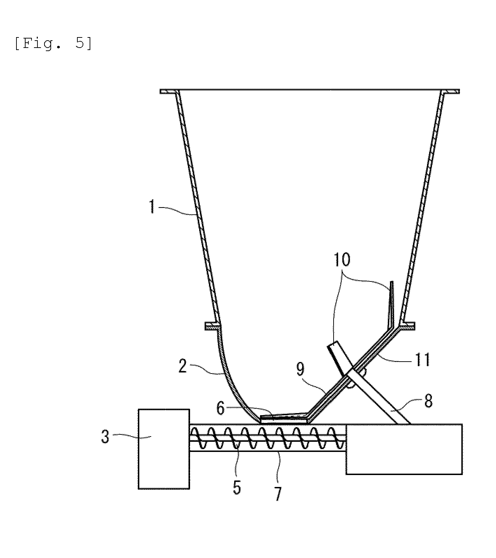

   Fig. 5 is a partial cross-sectional view of the embodiment having the circular inclined surface of Fig. 4.
[Fig. 6]

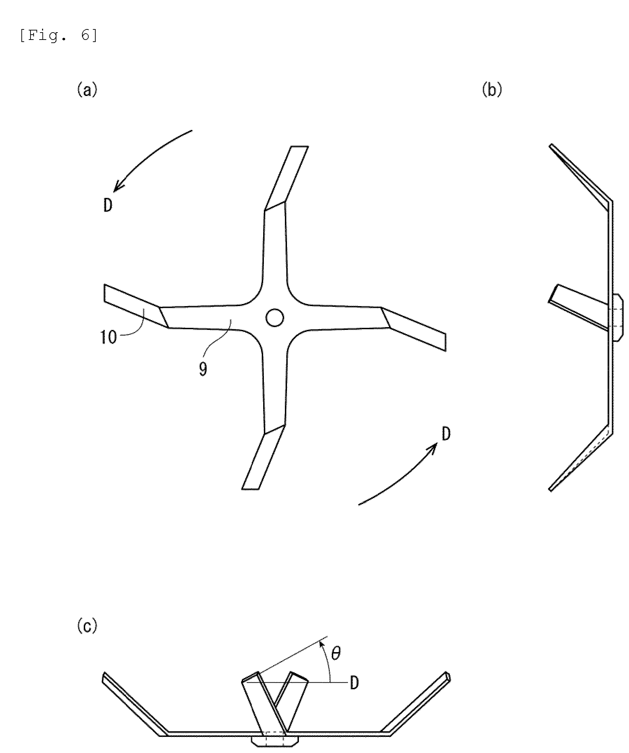

   Fig. 6 is a plan view and a side view showing one embodiment of a stirring blade that is used in the case of having the circular inclined surface of Fig. 4.

### Description of Embodiments

Hereinafter, a stirring and feeding apparatus, a feeding method, and a production method of a fibrous filler, and a production method of a thermoplastic resin composition of the present invention will be described with reference to drawings. Embodiments to be described below are merely examples, and the present invention is not necessarily limited thereto.

Fig. 1 is an exploded perspective view showing one embodiment of a stirring and feeding apparatus of the present invention. Fig. 2 is a partial cross-sectional view of one embodiment of the stirring and feeding apparatus of the present invention. In Figs. 1 and 2, a connecting tank having an approximately hemispherical inner circumferential surface is provided between a hopper and a discharge portion, and in the connecting tank, a shaft that vertically rotates around a rotation shaft that horizontally protrudes inwards from the inner circumferential surface of the connecting tank is provided, and a stirring blade for stirring a fibrous filler is provided at the tip of the shaft such that the stirring blade vertically rotates along the inner circumferential surface of the connecting tank.

As shown in Figs. 1 and 2, the stirring and feeding apparatus of the present invention includes a hopper 1 in which a fibrous filler is stored, a connecting tank 2 having an approximately hemispherical inner circumferential surface below the hopper 1, a screw 5 that supplies the fibrous filler to a discharge portion 3 from an opening portion 6 at the bottom portion of the connecting tank 2, and the like. The hopper 1 may be conical as shown in Fig. 1 or cylindrical. The connecting tank 2 needs to be approximately hemispherical and may have a curved surface, such as an ellipsoidal shape, in a part as long as the revolving stirring blade 10 does not come into contact with the connecting tank 2.

An agitator 4 is provided in the connecting tank 2, and the agitator 4 is provided with a shaft 9 that vertically rotates around a rotation shaft 8 that horizontally protrudes inwards from the inner circumferential surface of the connecting tank 2 and the stirring blade 10 for stirring the fibrous filler at the tip of the shaft 9 such that the stirring blade 10 vertically rotates (swivels) along the inner circumferential surface of the connecting tank 2.

The fibrous filler stored in the hopper 1 drops into the connecting tank 2 due to gravity and is stirred and spread by the vertical rotation (swiveling) of the stirring blade 10 provided at the front of the shaft 9 in the agitator 4.

Fig. 3 shows one embodiment of the stirring blade in the agitator 4, Fig. 3(a) is the plan view, and Fig. 3(b) is the right-side view. In Fig. 3(b), the shaft 9 that horizontally extends in Fig. 3(a) and stirring blades 10 at the tips thereof are omitted.

In the shaft 9, as shown in Fig. 3(a), two shafts may bond to each other at the rotation shaft 8 to form a cross shape, and a total of four stirring blades 10 may be provided. In addition, three shafts may intersect and bond to one another at the rotation shaft 8, and a total of six stirring blades 10 may be provided at the tips thereof point-symmetrically with respect to the rotation shaft 8 as the central point. Three shafts 9 may extend radially from the center of the rotation shaft 8 at intervals of 120°, and a total of three stirring blades 10 may be provided at the tips thereof (one stirring blade per shaft). One stirring blade may be provided at each of both ends of one shaft 9. The number of the stirring blades 10 is preferably two to six.

The stirring blades 10 may extend on the same surface side of the shaft 9 as shown in Fig. 3 or may alternately extend from the front side and the rear side as shown in Fig. 2. In a case where there are a plurality of the shafts 9, it is preferable that, for example, the stirring blades 10 are provided alternately on the front side, on the rear side, and the front side of the rotation surface of the shafts 9 in order as shown in Fig. 3(a).

As shown in Fig. 3(a), the stirring blade 10 is inclined inwards with respect to a rotation direction D (the tangential direction of the revolving circumference) of the stirring blade 10 such that the angle thereof becomes an angle θ in the direction of the rotation shaft 8, and the angle θ is set to 10° to 70°. When the angle is set as described above, uneven feeding from the bottom portion of the connecting tank 2 to the discharge portion 3 is suppressed, and uniform feeding becomes possible. When the angle θ is smaller than 10°, the force for conveying the fibrous filler to a cylinder 7 becomes weak, it is not possible to load a sufficient amount of the fibrous filler into the screw 5 for feeding the fibrous filler to the discharge portion 3 from the bottom portion of the connecting tank 2, and uniform feeding with the screw becomes difficult. When the angle θ is larger than 70°, the force that is applied to the rotation shaft of the agitator becomes too strong, and the rotation shaft is likely to be damaged. The angle θ is more preferably within a range of 20° to 60°. The angle θ is preferably 20° or more and is preferably 60° or less and more preferably 50° or less.

The stirring blade 10 extends along the approximately hemispherical inner circumferential surface of the connecting tank 2, and the shortest distance of the gap between the stirring blade 10 and the inner circumferential surface of the connecting tank is preferably set within a range of 0.2 to 5 cm and more preferably 0.3 to 3 cm. When the shortest distance is larger than 5 cm, the force for pressing the fibrous filler into the cylinder 7 becomes weak, it is difficult to load a sufficient amount of the fibrous filler into the cylinder 7, and uniform feeding with the screw 5 is likely to be difficult. When the shortest distance is less than 0.2 cm, the stirring blade 10 comes into contact with the inner surface of the hopper, and there is a possibility of the agitator 4 being damaged.

The connecting tank 2 is approximately hemispherical, but the diameter of the inner surface at the upper portion thereof is normally 15 to 50 cm and preferably 20 to 40 cm.

In the present invention, examples of the fibrous filler include inorganic fibers such as carbon fiber, glass fiber, alumina fiber, boron fiber, and ceramic fiber; organic fibers such as plant fiber (including kenaf and bamboo fiber), polyester fiber, aramid fiber, polyoxymethylene fiber, aromatic polyamide fiber, polyparaphenylene benzobisoxazole fiber, and ultra-high-molecular-weight polyethylene fiber; and the like. Among these, carbon fiber and glass fiber are preferable, and carbon fiber are particularly preferable.

The number-average fiber length of the fibrous filler being used is preferably 20 mm or shorter, furthermore, 10 mm or shorter and 1 mm or longer. Specifically, chopped fibers and milled fibers are preferable.

The bulk density V₀ of the raw material fibrous filler that is stored in the hopper is preferably 0.3 to 0.7 g/cm³, more preferably 0.35 to 0.65 g/cm³, and still more preferably within a range of 0.4 to 0.6 g/cm³. When the bulk density V₀ is 0.3 /cm³ or lower, it becomes impossible for the stirring blade to press a sufficient amount of a raw material having a bulk density that is increased by stirring into the cylinder, and uneven feeding is likely to occur. When the bulk density V₀ exceeds 0.7 g/cm³, a strong force is applied to the rotation shaft in the agitator, and the rotation shaft is likely to be damaged.

Particularly, in the present invention, a substance that is easy to spread and easily becomes bulkier (has a decreased bulk density) by stirring is suitably used as the fibrous filler, which is a raw material, since the effect of the present invention is large. Examples of the fibrous filler that easily becomes bulkier by stirring include fibrous fillers for which a sizing agent or the like is not used or which has been treated only to a small extent.

In the present invention, the bulk density represents the weight of the fibrous filler per certain volume, is the same as the aerated bulk specific gravity, the aerated bulk density, or the aerated apparent density, and refers to the bulk density when the fibrous filler is lightly and quietly loaded into a receiver. The bulk densities (V₀ and V₁) are values measured on the basis of a measuring method in accordance with ISO 60. Specifically, a metal cylinder having a volume of 100 cc, an inner diameter of 50 mm, and a smoothly-finished inner surface is used as a receiver into which the fibrous filler is to be loaded, the fibrous filler is quietly and slowly loaded into the receiver, once the receiver is fully filled, the raw material swelling out from the receiver is scraped off with a linear plate, the weight of the content in the receiver is measured up to one decimal place, and the bulk density is obtained.

The fibrous filler spread and stirred with the agitator 4 comes out from the opening portion 6 provided at the bottom portion of the connecting tank 2 and is supplied to the discharge portion 3 with the screw 5, which is intended to feed the fibrous filler to the discharge portion 3. The screw 5 may be a single screw or may be composed of a twin screw. The screw 5 is disposed in the cylinder 7, the fibrous filler from the opening portion 6 is loaded into the cylinder 7, and the screw 5 is driven to rotate to feed the fibrous filler to the discharge portion 3.

The opening portion 6 has a rectangular shape that corresponds to the screw 5 that is present immediately below the opening portion 6, and the center line of the opening portion 6 in the longitudinal direction is preferably matched to the rotation shaft 8 in the agitator 4 that is present immediately above the opening portion 6. The stirring blade 10 at an inclination angle of 10° to 70° rotates above the inner circumferential surface of the connecting tank 2, and the fibrous filler is sufficiently pressed into the cylinder 7 in which the screw 5 is present from the opening portion 6, which makes uniform feeding of the fibrous filler having a decreased bulk density possible.

An area obtained by multiplying the area of one stirring blade 10 by cosθ of the inclination angle is preferably within a range of 0.1 times to 1.0 time and more preferably within a range of 0.2 times to 0.8 times the opening area of the opening portion 6 seen from immediately above. When the area is smaller than 0.1 times, the force for pressing the fibrous filler into the cylinder 7 becomes weak, it is not possible to load a sufficient amount of the fibrous filler into the cylinder 7, and uniform feeding with the screw 5 is likely to be difficult. When the area is larger than 1.0 time, the force that is applied to the agitator 4 becomes strong, and the rotation shaft 8 is likely to be damaged.

Regarding the size of the opening portion 6, it is preferable that the long side is approximately 10 to 25 cm and the short side is approximately 5 to 15 cm, and the opening area is preferably approximately 50 to 350 cm².

The area obtained by multiplying the area of one stirring blade 10 by cosθ of the inclination angle is preferably approximately 10 to 350 cm².

The rotation speed of the agitator 4 is preferably 1% to 20%, more preferably 2% to 15%, and still more preferably 3% to 10% of the rotation speed of the screw 5. When the rotation speed is less than 1%, the amount of the fibrous filler that is pressed into with the agitator 4 becomes small, and uniform feeding is likely to be difficult. When the rotation speed exceeds 20%, the fibrous filler is excessively spread, fabric balls are generated, it becomes difficult for the fibrous filler to be pressed into the cylinder 7, it is not possible to load a sufficient amount of the fibrous filler into the cylinder 7, and uniform feeding with the screw 5 is likely to be difficult.

The rotation speed of the screw 5 is preferably approximately 10 to 600 rpm, and the rotation speed of the agitator 4 is preferably approximately 2 to 90 rpm.

The distance that the screw advances in the shaft direction when the screw has rotated once is referred to as "lead", and the lead and the pitch becomes equal to each other in a single-thread screw. In a double-thread screw, the lead becomes twice the pitch. When the screw diameter (outer diameter) is indicated by D, the lead of the screw 5 is preferably 0.5D to 1.5D. When the lead is larger than 1.5D, the force for transporting the fibrous filler becomes weak, and uniform feeding is likely to be difficult. Even when lead is smaller than 0.5D, the force for transporting the fibrous filler becomes weak, and uniform feeding is likely to be difficult. The lead of the screw 5 is more preferably 0.6D to 1.4D and still more preferably 0.7D to 1.3D.

The bulk density V₁ of the fibrous filler supplied to the discharge portion 3 becomes smaller than the bulk density V₀ of the fibrous filler that is stored in the hopper (preferably 0.3 to 0.7 g/cm³) and is preferably within a range of 0.1 to 0.5 g/cm³, more preferably 0.15 to 0.45 g/cm³, and still more preferably within a range of 0.2 to 0.4 g/cm³.

According to the present invention, in particular, even when a fibrous filler for which a sizing agent or the like is not used or which has been treated only to a small extent is a raw material, the fibrous filler is spread and stirred with the agitator having the above-described configuration, conveyed into the screw 5, and fed to the discharge portion 3, which makes it possible to obtain a fibrous filler that has been spread and has a low bulk density.

When the obtained fibrous filler is side-fed to an extruder, it is possible to obtain a fibrous filler enabling a thermoplastic resin composition containing the fibrous filler uniformly dispersed therein to be stably produced.

The kind of a raw material thermoplastic resin being used is not particularly limited, and any resin may be used as long as the resin is a thermoplastic resin. Examples of a thermoplastic resin suitable for use in the present invention include a crystalline thermoplastic resin or an amorphous thermoplastic resin, and specific examples thereof include polycarbonate resin; polyester resins such as polybutylene terephthalate resin and polyethylene terephthalate resin; styrene resins such as polystyrene resin, high impact polystyrene resin (HIPS), ABS resin, AES resin, and AS resin; polyolefin resins such as polyethylene resin and polypropylene resin; polyamide resins such as polyamide 6, polyamide 66, and polyamide MXD6; polyoxymethylene resin; polyphenylene sulfide resin; methacrylic resin such as PMMA resin; polyphenylene ether resin; polysulfone resin; polyethersulfone resin; polyarylate resin; polyetherimide resin; polyamideimide resin; polyimide resin; polyetherketone resin; polyetheretherketone resin; polyestercarbonate resin; liquid crystal polymer; and the like.

As the extruder, a single-screw or twin-screw extruder, particularly, a twin-screw extruder is preferable, and any of a vented screw or an unvented screw may be used, but a vented screw is preferable.

A raw material containing the thermoplastic resin and an additive for a resin that is blended as necessary is fed into a cylinder from a main feeding port of a hopper at the base of the extruder (not shown) in a pellet or powder form and transported to a first kneading portion. The raw material is heated in the first kneading portion, and the heating temperature is set based on the melting point, glass transition temperature or the like of the thermoplastic resin, which is a main component. The raw material melt-kneaded in the first kneading portion is further pressed against a resin to be supplied later. In addition, the fibrous filler obtained in the stirring and feeding apparatus is fed into the cylinder of the extruder from a side feeder provided downstream of the main feeding port and melt-kneaded in a second kneading portion.

The screw configuration in the kneading portion is preferably a combination of two or more elements selected from a forward conveying kneading disc, a reverse conveying kneading disc, and an orthogonal kneading disc.

The forward conveying kneading disc element is also referred to as an R kneading (hereinafter, also referred to as R in some cases) and normally has two or more blades, and the blade twist angle is preferably 10° to 75°. When the blades are installed to be twisted at a predetermined angle as described above, a zone in which a pseudo screw structure is formed, a strong shear force is applied to the resin while the resin is conveyed in the conveying direction, and kneading is performed is formed.

The reverse conveying kneading disc element is also referred to as an L kneading (hereinafter, also referred to as L in some cases) and normally has two or more blades, and the blade twist angle is preferably -10° to -75°. The reverse conveying kneading disc element is an element with a compression capability that holds the incoming resin back or works the incoming resin in the conveying-back direction and is an element that is provided downstream of an element that promotes kneading to hold the resin back and make a strong kneading effect be exhibited.

The orthogonal kneading disc element is also referred to as an N kneading (hereinafter, also referred to as N in some cases) and normally has two or more blades, and the blade twist angle is 75° to 105°. Since the blades are installed to be twisted at substantially 90°, the force for conveying the resin is weak, but the kneading power is strong.

The screw configuration in the first kneading portion is preferably composed of a combination of two or more elements, and it is preferable that an element that promotes kneading is disposed upstream and an element with a compression capability is disposed downstream. Therefore, in the kneading zone of a first step, it is preferable to dispose two or more selected from R, N, and L in the order of R, N, and L from the upstream side, and it is also preferable that the number of each of R, N, and L disposed is plural.

The screw in the second kneading portion is preferably composed of an element selected from the forward conveying kneading disc (R), the reverse conveying kneading disc (L), the orthogonal kneading disc (N), a forward conveying notched mixing screw, and a reverse conveying notched mixing screw.

A resin composition that has been melt-kneaded in the second kneading portion and contains the fibrous filler sufficiently dispersed therein is extruded in a strand shape from the nozzle at the tip of the extruder, cooled, and then cut with a cutter, whereby pellets of the thermoplastic resin composition are produced. This makes it possible to stably produce a thermoplastic resin composition in which the fibrous filler has been uniformly dispersed.

Figs. 4 to 6 are view for describing another embodiment of the present invention in which a circular inclined surface is provided at the lower portion of the connecting tank diagonally upwards from the lower portion of the connecting tank, a shaft that rotates around a rotation shaft that protrudes inwards from the center of the circular inclined surface is provided, and a stirring blade for stirring the fibrous filler is provided at the tip of the shaft such that the stirring blade rotates over the circular inclined surface.

As shown in Figs. 4 and 5, a stirring and feeding apparatus includes a hopper 1 in which fibrous filler is stored, a connecting tank 2 below the hopper 1, a screw 5 that supplies the fibrous filler to a discharge portion 3 from an opening portion 6 at the bottom portion of the connecting tank 2, and the like. The hopper 1 is preferably conical as shown in Fig. 4 or cylindrical, but may be prismatic.

The connecting tank 2 is connected to the hopper 1 at the upper portion, and the side wall of the connecting tank 2 may form a conical shape that is circular in a plan view or may form a cross-sectional shape that is elliptical in a plan view and is the same or different vertically. It is also preferable that the side wall of the connecting tank 2 has a cross-sectional shape that is larger in the lower side than in the upper side.

In the connecting tank 2, a circular inclined surface 11 is provided diagonally upwards from the lower portion, preferably the bottom portion, of the connecting tank, and an agitator 4 in which a shaft 9 that rotates around a rotation shaft 8 that protrudes inwards in an inclined direction from the center of the circular inclined surface 11 is provided, and a stirring blade 10 for stirring the fibrous filler is provided at the tip of the shaft 9 such that the stirring blade rotates over the circular inclined surface 11 is provided.

The fibrous filler stored in the hopper 1 drops into the connecting tank 2 due to gravity and is stirred and spread by the rotation (swiveling) of the stirring blade 10 provided at the front of the shaft 9 in the agitator 4 along the inclined surface 11.

Fig. 6 shows one embodiment of a stirring blade in the agitator 4, Fig. 6(a) is a plan view, Fig. 6(b) is the right-side view, and Fig. 6(c) is the front view. In Fig. 6(b), the shaft 9 that horizontally extends in Fig. 6(a) and stirring blades 10 at the tips thereof are omitted. In addition, in Fig. 6(c), the shafts 9 that extend horizontally and backwards and stirring blades 10 at the tips thereof are omitted.

In the shaft 9, as shown in Fig. 6(a), two shafts may bond to each other at the rotation shaft 8 to form a cross shape, and a total of four stirring blades 10 may be provided. In addition, three shafts may intersect and bond to one another at the rotation shaft 8, and a total of six stirring blades 10 may be provided at the tips thereof point-symmetrically with respect to the rotation shaft 8 as the central point. Three shafts 9 may extend radially from the center of the rotation shaft 8 at intervals of 120°, and a total of three stirring blades 10 may be provided at the tips thereof (one stirring blade per shaft). One stirring blade may be provided at each of both ends of one shaft 9. The number of the stirring blades 10 is preferably two to six.

It is preferable that the stirring blade 10 extends toward above the inclined surface 11 from the shaft 9 along the side wall of the connecting tank 2 as shown in Fig. 6(b).

As shown in Fig. 6(c), the stirring blade 10 is inclined inwards with respect to a rotation direction D (the tangential direction of the revolving circumference) of the stirring blade 10 such that the angle thereof becomes an angle θ in the direction of the rotation shaft 8, and the angle θ is set to 10° to 70°. When the angle is set as described above, uneven feeding from the bottom portion of the connecting tank 2 to the discharge portion 3 is suppressed, and uniform feeding becomes possible. When the angle θ is smaller than 10°, the force for conveying the fibrous filler to a cylinder 7 becomes weak, it is not possible to load a sufficient amount of the fibrous filler into the screw 5 for feeding the fibrous filler to the discharge portion 3 from the bottom portion of the connecting tank 2, and uniform feeding with the screw becomes difficult. When the angle θ is larger than 70°, the force that is applied to the rotation shaft of the agitator becomes too strong, and the rotation shaft is likely to be damaged. The angle θ is more preferably within a range of 20° to 60°. The angle θ is preferably 20° or more and is preferably 60° or less and more preferably 50° or less.

As shown in Fig. 5, the stirring blade 10 rotates over the inclined surface 11 along the side wall of the connecting tank 2, and the shortest distance of the gap between the stirring blade 10 and the inner wall surface of the connecting tank is preferably set within a range of 0.2 to 5 cm and more preferably 0.3 to 3 cm. When the shortest distance is larger than 5 cm, the force for pressing the fibrous filler into the cylinder 7 becomes weak, it is difficult to load a sufficient amount of the fibrous filler into the cylinder 7, and uniform feeding with the screw 5 is likely to be difficult. When the shortest distance is less than 0.2 cm, the stirring blade 10 comes into contact with the inner surface of the hopper, and there is a possibility of the agitator 4 being damaged.

The connecting tank 2 is preferably conical that is circular in a plan view or elliptical in a plan view, but the diameter of the inner wall surface is normally 15 to 60 cm and preferably 20 to 50 cm.

The diameter of the inclined surface 11 is preferably 15 to 60 cm and more preferably 20 to 50 cm.

The length from the rotation shaft 8 of the shaft 9 to the connecting portion of the stirring blade 10 is preferably 8 to 30 cm and more preferably 10 to 25 cm.

The fibrous filler is spread and stirred with the agitator 4 comes out from the opening portion 6 provided at the bottom portion of the connecting tank 2 and is supplied to the discharge portion 3 with the screw 5, which is intended to feed the fibrous filler to the discharge portion 3. The opening portion 6 is provided at a position where the stirring blade 10 presses the fibrous filler in from immediately above between the bottom portion of the connecting tank 2 and the inclined surface 11.

The screw 5 may be a single screw or may be composed of a twin screw. The screw 5 is disposed in the cylinder 7, the fibrous filler from the opening portion 6 is loaded into the cylinder 7, and the screw 5 is driven to rotate to feed the fibrous filler to the discharge portion 3.

The opening portion 6 has a rectangular shape that corresponds to the screw 5 that is present immediately below the opening portion 6, and the stirring blade 10 at an inclination angle of 10° to 70° sufficiently presses the fibrous filler into the cylinder 7 from the opening portion 6, which makes uniform feeding of the fibrous filler having a decreased bulk density possible.

An area obtained by multiplying the area of one stirring blade 10 by cosθ of the inclination angle is preferably within a range of 0.1 times to 1.0 time and more preferably within a range of 0.2 times to 0.8 times the opening area of the opening portion 6 seen from immediately above. When the area is smaller than 0.1 times, the force for pressing the fibrous filler into the cylinder 7 becomes weak, it is not possible to load a sufficient amount of the fibrous filler into the cylinder 7, and uniform feeding with the screw 5 is likely to be difficult. When the area is larger than 1.0 time, the force that is applied to the agitator 4 becomes strong, and the rotation shaft 8 is likely to be damaged.

Regarding the size of the opening portion 6, it is preferable that the long side is approximately 8 to 25 cm and the short side is approximately 4 to 15 cm, and the opening area is preferably approximately 35 to 350 cm².

The area obtained by multiplying the area of one stirring blade 10 by cosθ of the inclination angle is preferably approximately 5 to 350 cm².

The rotation speed of the agitator 4 is preferably 1% to 20%, more preferably 2% to 15%, and still more preferably 3% to 10% of the rotation speed of the screw 5. When the rotation speed is less than 1% thereof, the amount of the fibrous filler that is pressed into with the agitator 4 becomes small, and uniform feeding is likely to be difficult. When the rotation speed exceeds 20%, the fibrous filler is excessively spread, fabric balls are generated, it becomes difficult for the fibrous filler to be pressed into the cylinder 7, it is not possible to load a sufficient amount of the fibrous filler into the cylinder 7, and uniform feeding with the screw 5 is likely to be difficult.

The rotation speed of the screw 5 is preferably approximately 10 to 600 rpm, and the rotation speed of the agitator 4 is preferably approximately 2 to 90 rpm.

The distance that the screw advances in the shaft direction when the screw has rotated once is referred to as "lead", and the lead and the pitch becomes equal to each other in a single-thread screw. In a double-thread screw, the lead becomes twice the pitch. When the screw diameter (outer diameter) is indicated by D, the lead of the screw 5 is preferably 0.5D to 1.5D. When the lead is larger than 1.5D, the force for transporting the fibrous filler becomes weak, and uniform feeding is likely to be difficult. Even when lead is smaller than 0.5D, the force for transporting the fibrous filler becomes weak, and uniform feeding with the screw 5 is likely to be difficult. The lead of the screw 5 is more preferably 0.6D to 1.4D and still more preferably 0.7D to 1.3D.

The bulk density V₁ of the fibrous filler supplied to the discharge portion 3 becomes smaller than the bulk density V₀ of the fibrous filler that is stored in the hopper (preferably 0.3 to 0.7 g/cm³) and is preferably within a range of 0.1 to 0.5 g/cm³, more preferably 0.15 to 0.45 g/cm³, and still more preferably within a range of 0.2 to 0.4 g/cm³.

Even in a case where the circular inclined surface is provided at the lower portion of the connecting tank diagonally upwards from the lower portion of the connecting tank, according to the present invention, in particular, even when a fibrous filler for which a sizing agent or the like is not used or which has been treated only to a small extent is a raw material, the fibrous filler is spread and stirred with the agitator having the above-described configuration, conveyed into the screw 5, and fed to the discharge portion 3, which makes it possible to obtain a fibrous filler that has been spread and has a low bulk density.

### Examples

First, the following experiment was performed to determine how much stirring of a fibrous filler, which was a raw material, increased the bulk density (or decreased the bulk density).

A stirring and feeding apparatus "Twin Screw Gravimetric Feeder CE-W-1" (a connecting tank had a hemispherical shape with an inner diameter of 25 cm) manufactured by Kubota Corporation was used, an agitator was connected to "Agitator 2 for CE-W-1" (two stirring blades having a length of 11.8 cm and a tip width of 1.0 cm were attached to one shaft having a length of 22.2 cm and a width of 3.2 cm around a 12.2 cm-long rotation shaft that came out from the hemispherical side surface of the connecting tank and vertically rotated at an inclination angle θ of 0° with respect to the rotation direction) manufactured by Kubota Corporation, no screws were connected, the opening portion was sealed, and the stirred fibrous filler was made to stay. One kilogram of a fibrous filler for which the bulk density V₀ before being fed into a hopper had been measured was charged into the hopper 1, the agitator 4 was rotated at a speed of one rotation/second for 15 minutes, and the bulk density V₁ (bulk density after stirring) was obtained.

A fibrous filler for which the bulk density V₁ after stirring reaches 0.8 times or less of the raw material bulk density V₀ is particularly preferable as a raw material to which the present invention is applied.

For the following raw materials, the bulk densities V₀ and the bulk densities V₁ after stirring were obtained, and the bulk density ratios (V₁/V₀) were obtained. The results are as described below.
1. Carbon fiber-chopped fiber "DIALEAD K6371T" manufactured by Mitsubishi Chemical Corporation
   V₀: 0.48 g/cm³, V₁: 0.31 g/cm³, V₁/V₀: 0.65
2. Carbon fiber-chopped fiber "PYROFIL TR06U" manufactured by Mitsubishi Chemical Corporation
   V₀: 0.47 g/cm³, V₁: 0.39 g/cm³, V₁/V₀: 0.83
3. Glass fiber "chopped strand T-187" manufactured by Nippon Electric Glass Co., Ltd.
   V₀: 0.62 g/cm³, V₁: 0.54 g/cm³, V₁/V₀: 0.87
From the above results, it is found that "K6371T" is a raw material having a bulk density that is increased by stirring.

### [Example 1]

As a stirring and feeding apparatus, a apparatus including a conical hopper 1 having a lower portion inner diameter of 35 cm, a height of 65 cm, and an upper portion inner diameter of 60 cm and a hemispherical connecting tank 2 having an inner diameter of 35 cm was used, and as an agitator 4, an agitator (A1) in which a shaft 9 had a length of 16.0 cm (from a rotation shaft to the outermost peripheral portion) and a width of 4.0 cm, a stirring blade 10 had a length of 17.0 cm and a tip width of 1.0 cm, and a total of four stirring blades 10 inclined at 30° in the rotation direction were alternately provided on the front side and the rear side of the shaft surface at the tips of the shaft 9 having a cross shape as shown in Fig. 3 was used. The stirring blade 10 had an arc shape that rotated along the inner surface of the hemispherical connecting tank 2 and was installed such that the gap from the inner surface of the connecting tank 2 at each position reached 1.5 cm.

In an opening portion 6, the long side was 17.0 cm, the short side was 8.5 cm, and the opening area was 144.5 cm². The area of one stirring blade 10 was 47.8 cm², and the area obtained by multiplying the area of one stirring blade 10 by cosθ of the inclination angle (= 30°) was 41.4 cm², which was 0.29 times the area of the opening portion 6.

As a screw 5 in a cylinder 7, a single-threaded screw having a screw diameter of 45 mm (D) and a lead of 42 mm (0.93D) was used.

40 kg of a carbon fiber-chopped fiber "K6371T" was charged into the hopper 1. The motor ratio (a value obtained by dividing the rotation speed rpm of the agitator by the rotation speed rpm of the screw) of the rotation speed of the screw 5 was set to 5%. The amount discharged to a discharge portion 3 was set to 20 kg/h, and constant-weight operation was performed. The amounts discharged after 60 minutes to 100 minutes were obtained as described below.

After 60 minutes, a container was placed below the discharge portion 3, and a weight W60 of the carbon fiber discharged for 36 seconds was obtained. Next, after 70 minutes, the weight was measured in the same manner and was regarded as W70. W80, W90, and W100 were obtained in the same manner. The maximum value and the minimum value of the five W's from W60 to W100, the difference between the maximum value and the minimum value, the average value of the five W's, and the fluctuation rate (%, the difference between the maximum value and the minimum value of the five W's/the average value of the five W's) are shown in Table 1.

40 kg of the carbon fiber-chopped fiber "K6371T" discharged to the discharge portion 3 was collected, furthermore, 40 kg of new "K6371T" was fed into the hopper 1 and discharged under the same conditions, and a total of 80 kg of "K6371T" was obtained. The bulk density was measured and found out to be 0.19 g/cm³.

It was found that the spreading of "K6371T" was promoted by the rotation of the agitator 4 or the rotation of the screw 5 in the stirring and feeding apparatus of the present invention and the bulk density was significantly decreased as described above. This discharged "K6371T" is referred to as "spread K6371T."

### [Example 2]

Operation was performed in the same manner as in Example 1 except that, in Example 1, the agitator (A1) was changed to an agitator (A2) having a total of two stirring blades 10 inclined at 30° in the rotation direction on the front side and the rear side of the shaft surface at both ends of one shaft 9. The area of one stirring blade 10 was 47.8 cm², and the area obtained by multiplying the area of one stirring blade 10 by cosθ of the inclination angle (= 30°) was 41.4 cm², which was 0.29 times the area of the opening portion 6.

### [Comparative Example 1]

Operation was performed in the same manner as in Example 1 except that the agitator 4 was changed to an agitator (AX) having a total of two stirring blades 10 that were not inclined on the front side and the rear side of the shaft surface at both ends of one shaft 9.

### [Example 3]

Operation was performed in the same manner as in Example 1 except that the carbon fiber-chopped fiber "K6371T" (bulk density: 0.48 g/cm³) was changed to "spread K6371T" (bulk density: 0.19 g/cm³).

### [Comparative Example 2]

Operation was performed in the same manner as in Comparative Example 1 except that the carbon fiber-chopped fiber "K6371T" (bulk density: 0.48 g/cm³) was changed to "spread K6371T" (bulk density: 0.19 g/cm³).

The above results are shown in Table 1 below.

In Table 1, as evaluation, the fluctuation rates (the difference between the maximum value and the minimum value of the five W's/the average value of the five W's) were determined with the following standards.
A: The fluctuation rate is 7% or less
B: The fluctuation rate is more than 7% and 10% or less
C: More than 10% and 15% or less
D: More than 15%

**[Table 1]**

| | Ex.1 | Ex.2 | Comp. Ex.1 | Ex.3 | Comp. Ex.2 |
|---|---|---|---|---|---|
| Agitator | A1 | A2 | AX | A1 | AX |
| Number of stirring blades | 4 | 2 | 2 | 4 | 2 |
| Chopped carbon fiber | K6371T | K6371T | K6371T | Spread K6371T | Spread K6371T |
| Bulk dencity of fiber (g/cm³) | 0.48 | 0.48 | 0.48 | 0.19 | 0.19 |
| Set flow rate (kg/h) | 20 | 20 | 20 | 20 | 20 |
| W60 to W100 maximum value (g) | 204 | 205 | 218 | 209 | 235 |
| W60 to W100 minimum value (g) | 195 | 190 | 178 | 193 | 174 |
| W60 to W100 average value (g) | 199 | 197 | 196 | 202 | 205 |
| Maximum value - minimum value (g) | 9 | 15 | 40 | 16 | 61 |
| Fluctuation rate (%) | 4.5 | 7.6 | 20.4 | 7.9 | 29.8 |
| Evaluation | A | B | D | B | D |

### [Production Example 1 of thermoplastic resin composition]

As an extruder, a twin screw extruder "TEX44αII" manufactured by The Japan Steel Works, Ltd. was used. The screw configurations were RRNNL in a first kneading portion and RNL in a second kneading portion. R is a forward conveying kneading disc, N is an orthogonal kneading disc, L is a reverse conveying kneading disc, and discs each having five paddles and a length of 44 mm were used. The cylinder set temperature was set to 260°C.

As a main raw material, a polybutylene terephthalate resin "NOVADURAN 5008" manufactured by Mitsubishi Engineering-Plastics Corporation was used, fed to the screw root with a belt feeder at 180 kg/h, and melted in the first kneading portion. A side feed screw was installed between the first kneading portion and the second kneading portion, the chopped carbon fiber "K6371T" obtained by the method of Example 1 was fed at 20 kg/h and kneaded in the second kneading portion. The screw rotation speed was set to 250 rpm. A strand was taken out from a die, cooled in a water tank, and cut with a pelletizer, thereby obtaining pellets.

Extrusion was continued for one hour, the extrusion and the strand were stable, and over-torquing or strand breakage did not occur. One gram of the pellets were dissolved in a solvent mixture of phenol and tetrachloroethane (1/1), which are good solvents, the carbon fiber was filtered and dried, and the weight was measured. The weight of the taken-out carbon fiber was 0.097 g (the carbon component excluding a sizing agent in 0.1 g of the carbon fiber was 0.098 g). From this fact, it was confirmed that the chopped carbon fiber "K6371T" was uniformly fed.

### [Production Comparative Example 1 of thermoplastic resin composition]

Production was performed in the same manner as in Production Example 1 except that the carbon fiber obtained in Comparative Example 2 was fed instead of the chopped carbon fiber. The torque fluctuation was large, over-torquing occurred once every hour, and the extruder was stopped. In addition, the strand broke three times. It was well found that the weight of the carbon fiber taken out from one gram was 0.089 g and the feeding of the chopped carbon fiber had fluctuated.

### [Production Comparative Example 2 of thermoplastic resin composition]

Production was performed in the same manner as in Production Example 1 of thermoplastic resin composition except that a polycarbonate resin "IUPILON S3000F" manufactured by Mitsubishi Engineering-Plastics Corporation was used as a main raw material, and ethylene chloride was used as a solvent that dissolved the polycarbonate resin. Extrusion and a strand were stable, and over-torquing or strand breakage did not occur. The weight of the taken-out carbon fiber was 0.096 g, and it was confirmed that the chopped carbon fiber K6371T was uniformly fed.

### [Production Example 3 of thermoplastic resin composition]

Production was performed in the same manner as in Production Example 1 of thermoplastic resin composition except that a polyamide resin "MXD NYLON 6000" manufactured by Mitsubishi Gas Chemical Company, Inc. was used as a main raw material. Extrusion and a strand were stable, and over-torquing or strand breakage did not occur. The weight of the taken-out carbon fiber was 0.097 g, and it was confirmed that the chopped carbon fiber K6371T was uniformly fed.

### [Example 4]

As a stirring and feeding apparatus, a conical hopper 1 having a lower portion diameter of 29 cm, a height of 65 cm, and an upper portion diameter of 60 cm, a connecting tank 2 that extended in an approximately conical shape having a bottom portion diameter of appropriately 40 cm downward from an upper portion opening circle having a diameter of 29 cm, and a connecting tank 2 including a circular inclined surface 11 having a diameter of 26 cm provided diagonally upwards from the lower portion at an angle of 45° at the bottom portion were provided, and as an agitator 4, an agitator in which a shaft 9 that rotated around a rotation shaft 8 present in the center of the inclined surface 11 was provided and a stirring blade 10 rotating above the circular inclined surface was provided at the tip of the shaft 9 was used. An agitator (A1) in which the shaft 9 had a length from the rotation shaft of 13 cm and a width of 2.5 cm, the stirring blade 10 had a length of 10 cm, a root width of 2.9 cm, and a tip width of 2.3 cm, and a total of four stirring blades 10 inclined at 30° in the rotation direction were provided at the tips of the shaft 9 having a cross shape as shown in Fig. 3 was used. The stirring blade 10 was installed such that the gap between the tip thereof and the inner wall surface of the connecting tank 2 reached 0.7 cm at the closest position.

In an opening portion 6, the long side was 11.0 cm, the short side was 5.5 cm, and the opening area was 60.5 cm². The area of one stirring blade 10 was 26.0 cm², and the area obtained by multiplying the area of one stirring blade 10 by cosθ of the inclination angle (= 30°) was 22.5 cm², which was 0.37 times the area of the opening portion 6.

As a screw 5 in a cylinder 7, a single-threaded screw having a screw diameter of 25.5 mm (D) and a lead of 26 mm (1.02D) was used.

20 kg of chopped carbon fiber "K6371T" was charged into the hopper 1. The motor ratio (a value obtained by dividing the rotation speed rpm of the agitator by the rotation speed rpm of the screw) of the rotation speed of the screw 5 was set to 5%. The amount discharged to a discharge portion 3 was set to 10 kg/h, and constant-weight operation was performed. The amounts discharged after 60 minutes to 100 minutes were obtained as described below.

After 60 minutes, a container was placed below the discharge portion 3, and a weight W60 of the carbon fiber discharged for 36 seconds was obtained. Next, after 70 minutes, the weight was measured in the same manner and was regarded as W70. W80, W90, and W100 were obtained in the same manner. The maximum value and the minimum value of the five W's from W60 to W100, the difference between the maximum value and the minimum value, the average value of the five W's, and the fluctuation rate (%, the difference between the maximum value and the minimum value of the five W's/the average value of the five W's) are shown in Table 2.

20 kg of the chopped carbon fiber "K6371T" discharged to the discharge portion 3 was collected, furthermore, 20 kg of new "K6371T" was fed into the hopper 1 and discharged under the same conditions, and a total of 40 kg of "K6371T" was obtained. The bulk density was measured and found out to be 0.19 g/cm³.

It was found that the spreading of "K6371T" was promoted by the rotation of the agitator 4 or the rotation of the screw 5 in the stirring and feeding apparatus of the present invention and the bulk density was significantly decreased as described above. This discharged "K6371T" is referred to as "spread K6371T."

### [Example 5]

Operation was performed in the same manner as in Example 4 except that, in Example 4, the agitator (A1) was changed to an agitator (A2) having a total of two stirring blades 10 inclined at 30° in the rotation direction at both ends of one shaft 9. The area of one stirring blade 10 was 26.0 cm², and the area obtained by multiplying the area of one stirring blade 10 by cosθ of the inclination angle (= 30°) was 22.5 cm², which was 0.37 times the area of the opening portion 6.

### [Comparative Example 3]

Operation was performed in the same manner as in Example 4 except that the agitator 4 was changed to an agitator (AX) having a total of two stirring blades 10 that were not inclined at both ends of one shaft 9.

The above results are shown in Table 2 below.

In Table 2, as evaluation, the fluctuation rates (the difference between the maximum value and the minimum value of the five W's/the average value of the five W's) were determined with the same standards (A to D) as described above.

**[Table 2]**

| | Ex.4 | Ex.5 | Comp. Ex.3 |
|---|---|---|---|
| Agitator | A1 | A2 | AX |
| Number of stirring blades | 4 | 2 | 2 |
| Chopped carbon fiber | K6371T | K6371T | K6371T |
| Bulk dencity of fiber (g/cm³) | 0.48 | 0.48 | 0.48 |
| Set flow rate (kg/h) | 10 | 10 | 10 |
| W60 to W100 maximum value (g) | 104 | 105 | 111 |
| W60 to W100 minimum value (g) | 97 | 96 | 85 |
| W60 to W100 average value (g) | 102 | 101 | 97 |
| Maximum value - minimum value (g) | 7 | 9 | 26 |
| Fluctuation rate (%) | 6.9 | 8.9 | 26.8 |
| Evaluation | A | B | D |

### [Production Example 4 of thermoplastic resin composition]

As an extruder, a twin screw extruder "TEX44αII" manufactured by The Japan Steel Works, Ltd. was used. The screw configurations were RRNNL in a first kneading portion and RNL in a second kneading portion. R is a forward conveying kneading disc, N is an orthogonal kneading disc, L is a reverse conveying kneading disc, and discs each having five paddles and a length of 44 mm were used. The cylinder set temperature was set to 260°C.

As a main raw material, a polybutylene terephthalate resin "NOVADURAN 5008" manufactured by Mitsubishi Engineering-Plastics Corporation was used, fed to the screw root with a belt feeder at 180 kg/h, and melted in the first kneading portion. A side feed screw was installed between the first kneading portion and the second kneading portion, the chopped carbon fiber "K6371T" obtained by the method of Example 1 was fed at 20 kg/h and kneaded in the second kneading portion. The screw rotation was set to 250 rpm. A strand was taken out from a die, cooled in a water tank, and cut with a pelletizer, thereby obtaining pellets.

Extrusion was continued for one hour, the extrusion and the strand were stable, and over-torquing or strand breakage did not occur. One gram of the pellets were dissolved in a solvent mixture of phenol and tetrachloroethane (1/1), which are good solvents, the carbon fiber was filtered and dried, and the weight was measured. The weight of the taken-out carbon fiber was 0.096 g (the carbon component excluding a sizing agent in 0.1 g of the carbon fiber was 0.098 g). From this fact, it was confirmed that the chopped carbon fiber "K6371T" was uniformly fed.

### [Production Comparative Example 2 of thermoplastic resin composition]

Production was performed in the same manner as in Production Example 4 except that the carbon fiber obtained in Comparative Example 3 was fed instead of the chopped carbon fiber. The torque fluctuation was large, over-torquing occurred every hour, and the extruder was stopped. In addition, the strand broke three times. It was well found that the weight of the carbon fiber taken out from one gram was 0.085 g and the feeding of the chopped carbon fiber had fluctuated.

### [Production Example 5 of thermoplastic resin composition]

Production was performed in the same manner as in Production Example 1 of thermoplastic resin composition except that a polycarbonate resin "IUPILON S3000F" manufactured by Mitsubishi Engineering-Plastics Corporation was used as a main raw material, and ethylene chloride was used as a solvent that dissolved the polycarbonate resin. Extrusion and a strand were stable, and over-torquing or strand breakage did not occur. The weight of the taken-out carbon fiber was 0.096 g, and it was confirmed that the chopped carbon fiber K6371T was uniformly fed.

### [Production Example 6 of thermoplastic resin composition]

Production was performed in the same manner as in Production Example 4 except that a polyamide resin "MXD NYLON 6000" manufactured by Mitsubishi Gas Chemical Company, Inc. was used as a main raw material, and hexafluoroisopropanol was used as a solvent. Extrusion and a strand were stable, and over-torquing or strand breakage did not occur. The weight of the taken-out carbon fiber was 0.099 g, and it was confirmed that the chopped carbon fiber K6371T was uniformly fed.

### Industrial Applicability

The stirring and feeding apparatus, the feeding method, and the production method of a fibrous filler, and the production method of a thermoplastic resin composition of the present invention enable uniform and stable transport of even a fibrous filler that is easy to spread and has a low bulk density with a screw and makes it possible to stably produce a thermoplastic resin composition in which a fibrous filler has been uniformly dispersed.

### Reference Signs List

- 1: Hopper
- 2: Connecting tank
- 3: Discharge portion
- 4: Agitator
- 5: Screw
- 6: Opening portion
- 7: Cylinder
- 8: Rotation shaft
- 9: Shaft
- 10: Stirring blade
- 11: Inclined surface

## Claims

1. A stirring and feeding apparatus for feeding a fibrous filler from a hopper storing the fibrous filler to a discharge portion, comprises:
a connecting tank between the hopper and the discharge portion,
wherein, in the connecting tank, a shaft that rotates around a rotation shaft is provided, and a stirring blade for stirring the fibrous filler is provided at a tip of the shaft such that the stirring blade rotates along an inner circumferential surface of the connecting tank, and the stirring blade is inclined inwards at an angle θ of 10° to 70° with respect to a rotation direction of the stirring blade.

2. The stirring and feeding apparatus for a fibrous filler of claim 1,
wherein the stirring and feeding apparatus of a fibrous filler includes a connecting tank having an approximately hemispherical inner circumferential surface between the hopper and the discharge portion, in the connecting tank a shaft that vertically rotates around a rotation shaft that horizontally protrudes inwards from the inner circumferential surface of the connecting tank is provided, and a stirring blade for stirring the fibrous filler is provided at a tip of the shaft such that the stirring blade vertically rotates along the inner circumferential surface of the connecting tank, and the stirring blade is inclined inwards at an angle θ of 10° to 70° with respect to a rotation direction of the stirring blade.

3. The stirring and feeding apparatus for a fibrous filler of claim 2,
wherein a shortest distance of a gap between the stirring blade and the inner circumferential surface of the connection tank is within a range of 0.2 to 5 cm.

4. The stirring and feeding apparatus for a fibrous filler of claim 1,
wherein the connecting tank between the hopper and the discharge portion is provided, and a circular inclined surface is provided at a lower portion of the connecting tank diagonally upwards from the lower portion of the connecting tank, a shaft that rotates around a rotation shaft that protrudes inwards from a center of the circular inclined surface is provided, a stirring blade for stirring the fibrous filler is provided at a tip of the shaft such that the stirring blade rotates over the circular inclined surface, and the stirring blade is inclined inwards at an angle θ of 10° to 70° with respect to a rotation direction of the stirring blade.

5. The stirring and feeding apparatus of claim 4,
wherein a shortest distance of a gap between the tip of the stirring blade and an inner wall surface of the connection tank is within a range of 0.2 to 5 cm.

6. The stirring and feeding apparatus of claim 1,
wherein the number of the stirring blades is two to six.

7. The stirring and feeding apparatus of claim 1,
wherein, at a bottom portion of the connecting tank, a screw for feeding the fibrous filler to the discharge portion is provided.

8. The stirring and feeding apparatus of claim 1,
wherein an area obtained by multiplying an area of each stirring blade by cosθ of an inclination angle is within a range of 0.1 times to 1.0 time an opening area of an opening portion at the bottom portion of the connecting tank toward the screw when seen from immediately above.

9. A method for feeding a fibrous filler stored in a hopper to a discharge portion,
wherein a connecting tank is provided between the hopper and the discharge portion, in the connecting tank, an agitator in which a shaft that rotates around a rotation shaft is provided, and a stirring blade for stirring the fibrous filler is provided at a tip of the shaft such that the stirring blade rotates along an inner circumferential surface of the connecting tank, and the stirring blade is inclined inwards at an angle θ of 10° to 70° with respect to a rotation direction of the stirring blade, is provided, and the fibrous filler is spread with the agitator and fed to the discharge portion with a screw provided at a bottom portion of the connecting tank.

10. The supply method of a fibrous filler of claim 9,
wherein a rotation speed of the agitator is 1% to 20% of a rotation speed of the screw.

11. The supply method of a fibrous filler of claim 9 or 10,
wherein a bulk density V₀ of the fibrous filler that is stored in the hopper is 0.3 to 0.7 g/cm³ and a bulk density V₁ of the discharged fibrous filler is within a range of 0.1 to 0.5 g/cm³ that is smaller than V₀.

12. A production method for producing a fibrous filler having a bulk density decreased by spreading the fibrous filler stored in a hopper,
wherein a connecting tank is provided between the hopper and a discharge portion, in the connecting tank, an agitator in which a shaft that rotates around a rotation shaft is provided, a stirring blade for stirring the fibrous filler is provided at a tip of the shaft such that the stirring blade rotates along an inner circumferential surface of the connecting tank, and the stirring blade is inclined inwards at an angle θ of 10° to 70° with respect to a rotation direction of the stirring blade, is provided, and the fibrous filler is spread with the agitator and supplied to the discharge portion with a screw provided at a bottom portion of the connection tank.

13. The production method of a fibrous filler of claim 12,
wherein a bulk density V₀ of the fibrous filler that is stored in the hopper is 0.3 to 0.7 g/cm³, and a bulk density V₁ of the discharged fibrous filler is within a range of 0.1 to 0.5 g/cm³ that is smaller than V₀.

14. A production method for producing a thermoplastic resin composition containing a fibrous filler blended into a thermoplastic resin with an extruder,
wherein a fibrous filler having a decreased bulk density obtained by the production method of claim 12 or 13 is side-fed from a side feeder provided downstream of a main feeding port of a raw material containing the thermoplastic resin, and melt-kneaded.
